# EUROPÄISCHE PATENTSCHRIFT

(11) **EP 1 964 741 B1**
(45) Veröffentlichungstag und Bekanntmachung des Hinweises auf die Patenterteilung: **03.04.2013**
(21) Anmeldenummer: 08100202.4
(22) Anmeldetag: 08.01.2008
(51) Int. Cl.: B60T 13/74, B60T 7/10

(54) **Elektrische Parkbremse**
Electric parking brake
Frein de stationnement électrique

(30) Priorität: 28.06.2007 DE 102007029910; 28.02.2007 DE 102007009691
(43) Veröffentlichungstag der Anmeldung: 03.09.2008
(73) Patentinhaber: ROBERT BOSCH GMBH, 70442 Stuttgart (DE)
(72) Erfinder: Kornhaas, Robert, 73565, Spraitbach (DE); Chittka, Stefan, 93700, Drancy (DE)

(56) Entgegenhaltungen:
- EP-A1- 1 547 918
- EP-A2- 0 467 112
- DE-A1- 10 223 880
- DE-A1- 19 937 159

## Beschreibung

### Stand der Technik

Die vorliegende Erfindung betrifft eine elektrische Parkbremse für Fahrzeuge.

Elektrische Parkbremsen sind aus dem Stand der Technik in unterschiedlichen Ausgestaltungen bekannt. Beispielsweise sind elektrische Parkbremsen vom Typ Motor-on-Calliper bekannt, welche auf einer Hinterachse an jeder Radbremse Aktuator mit Elektromotor aufweisen. Hierbei ist für beide Elektromotoren ein gemeinsames Steuergerät vorgesehen. Dieses Steuergerät beinhaltet die Aufbereitung des Fahrerwunsches (Verzögerung der Fahrgeschwindigkeit bzw. Fahrzeughalten im Parkvorgang) sowie die Logik (Stillstandsmanagement, Koordination mit anderen Systemen und die Regelung der Zuspannkraft an den Radbremsen) und die Ansteuerung der Elektromotoren.

DE 102 23 880 A 1 beschreibt ein Verfahren zur gegenseitigen Überwachung der Komponenten eines dezentral verteilten Rechnersystems, wie es z.B. für eine elektrische Parkbremse verwendet werden kann. Die Komponenten des Rechnersystems sind als Radmodule RM_1 bis RM_4 ausgebildet, in denen Stellsignale für elektrische Aktuatoren zur Regelung der Bremskraft für die einzelnen Räder eines Kraftfahrzeuges berechnet und an diese ausgegeben werden.

### Vorteile der Erfindung

Die erfindungsgemäße elektrische Parkbremse mit den Merkmalen des Patentanspruches 1 weist demgegenüber den Vorteil auf, dass jeder am Rad zugeordneten Parkbremseinheit eine separate Steuerung zugewiesen ist. Mit anderen Worten sind jedem an einer Radbremse angeordneten Aktuator ein separates Steuergerät zugeordnet. Dabei sind die beiden Aktuatoren an zwei einander gegenüberliegenden bzw. entgegengesetzten Fahrzeugrädern der gleichen Achse angeordnet. Hierdurch wird zum einen eine Redundanz für die elektrische Parkbremse sichergestellt, da auch bei Ausfalle eines der Steuergeräte das Fahrzeug mit dem anderen Steuergerät und dem zugehörigen Aktor durch die Parkbremse gehalten werden kann. Hierbei funktioniert die Parkbremse zwar nur an einem Rad, dies ist jedoch zum Halten des Fahrzeugs ausreichend. Ferner können durch das Vorsehen von radzugeordneten Steuergeräten die funktionalen Eigenschaften wie z.B. kleine Systemreaktionszeiten, höhere Stellgenauigkeit und geringere Geräusche verbessert werden.

Die beiden angesteuerten Aktuatoren sind jeweils Parkbremsaktuatoren (Feststellbremsaktuatoren), wobei die beiden Parkbremsaktuatoren an einander gegenüberliegenden Rädern einer Fahrzeugachse, insbesondere der hinteren Fahrzeugachse, angebracht sind.

Um einen möglichst kompakten und kleinbauenden Aufbau aufzuweisen, sind die radzugeordneten Steuergeräte an den ihnen zugeordneten Aktuatoren unmittelbar angebaut. Ferner kann durch die Anordnung der Steuergeräte an den ihnen zugeordneten Aktuatoren eine kurze Systemreaktionszeit durch eine lokale Zuspann-Kraftregelung erreicht werden. Die Reduktion des Leistungswiderstands aufgrund einer Verkürzung von Leitungen von und zum Aktuator sowie eine Reduktion von elektrischen Trennstellen können höhere Klemmkräfte während der Aktivierung der elektrischen Parkbremse erreicht werden.

Um geringere thermische Belastungen für das Steuergerät zu ermöglichen, sind die radzugeordneten Steuergeräte jeweils unmittelbar an einem Bremssattel angeordnet. Der Bremssattel weist dabei eine große Masse auf, so dass eine Wärmeentwicklung im Steuergerät schnell und sicher abgeleitet werden kann.

Die Unteransprüche zeigen bevorzugte Weiterbildungen der Erfindung.

Gemäß einer bevorzugten Ausgestaltung der vorliegenden Erfindung umfasst die elektrische Parkbremse ferner ein drittes systemzugeordnetes Steuergerät, welches die beiden radzugeordneten Steuergeräte ansteuert. Somit sind zwei Steuergeräte direkt an den Radbremsen angeordnet und ein drittes Steuergerät steuert die beiden radzugeordneten Steuergeräte. Dadurch kann eine funktionale Integrierbarkeit der elektrischen Parkbremse in bestehende elektronische Systeme des Fahrzeugs, wie z.B. Bremssteuerungssysteme und Fahrassistenzsysteme, erleichtert werden. Hierdurch kann auch eine Modularisierung der Systeme erreicht werden, so dass insbesondere eine einfache Anpassung an unterschiedliche Fahrzeughersteller möglich ist. Beispielsweise kann eine Modularisierung derart durchgeführt werden, dass eine Trennung zwischen einer Aufbereitung eines Fahrerwunsches durch das dritte Steuergerät erfolgt und die restlichen Systemfunktionen der elektrischen Parkbremse jeweils in den radzugeordneten Steuergeräten erfolgt.

Besonders bevorzugt umfasst jedes der radzugeordneten Steuergeräte wenigstens eine Leistungselektronik, einen Bus-Treiber und Logikschaltungen. Insbesondere durch den Einsatz von Halbleiter-Schaltern können kürzere Systemreaktionszeiten bei der Ansteuerung der Aktuatoren erreicht werden. Ferner können dadurch bessere Stellgenauigkeiten und eine höhere Dynamik des Verzögerungsvorgangs erhalten werden.

Die gegebenenfalls getaktete Motoransteuerung mittels einer Halbleiterendstufe erzeugt ferner ein geringeres Geräusch während des Betriebs der elektrischen Radbremse.

Vorzugsweise ist die Leistungselektronik der radzugeordneten Steuergeräte am Bremssattel und/oder am Parkbremsaktuator der jeweiligen Parkbremse angebracht. Dadurch wird eine Reduzierung der thermischen Belastung der Leistungselektronik aufgrund großer Bremssattelmassen bzw. großer Aktuatormassen erreicht.

Besonders bevorzugt ist die elektrische Parkbremse eine reine Feststellbremse, bei welcher eine Betriebsbremse des Fahrzeugs durch eine hydraulische Bremsanlage realisiert ist. Die elektrische Parkbremse ist somit vom Typ Motor-on-Calliper.

Gemäß einer weiteren bevorzugten Ausgestaltung der vorliegenden Erfindung umfasst die Leistungselektronik ferner Feldeffekttransistoren.

Gemäß einer weiteren bevorzugten Ausgestaltung der vorliegenden Erfindung umfassen die radzugeordneten Steuergeräte der elektrischen Parkbremse Microcontroller.

Um einen Diebstahl des Fahrzeugs zu verhindern, ist jedes der Steuergeräte derart ausgelegt, dass das Steuergerät nur nach Übermittlung eines vorbestimmten Codes aktivierbar ist. Hierdurch kann verhindert werden, dass beispielsweise durch eine direkte Brems-Bestromung der Aktuatoren von außen ein Öffnen der geschlossenen Parkbremse möglich ist. Somit kann die elektrische Parkbremse eine Diebstahlverhinderungsfunktion übernehmen, so dass beispielsweise andere aufwendige Diebstahlsicherungen des Fahrzeugs, z.B. ein Lenkradschloss o.Ä., entfallen können. Ferner kann durch die Codierung der Steuergeräte auch verhindert werden, dass beispielsweise Bauteile aus gestohlenen Fahrzeugen in anderen Fahrzeugen eingebaut werden, da die jeweilige Codierung fahrzeugspezifisch ist. Auch kann bei Verwendung der elektrischen Parkbremse beispielsweise eine Sperrklinke bei Automatikgetrieben entfallen, wenn eine aktorintegrierte Ansteuerung mit anderen im Fahrzeug vorhandenen Steuergeräten erfolgt.

Das dritte Steuergerät ist vorzugsweise ein ESP-Steuergerät oder ein Getriebe-Steuergerät oder ein Motor-Steuergerät oder ein ABS-Steuergerät (ABS = Anti-Blockier-System) oder ein ASR-Steuergerät (ASR = Anti-Schlupf-Regelung) oder ein DCU-Steuergerät (DCU = Domain Control Unit). Das dritte Steuergerät kann auch irgendein anderes im Fahrzeug vorhandenes Steuergerät sein, welches zusätzlich noch die Funktion der Ansteuerung der radzugeordneten Steuergeräte der elektrischen Parkbremse übernimmt.

Die elektrische Parkbremse umfasst somit wenigstens zwei intelligente Radaktuatoren, welchen jeweils ein Steuergerät zugeordnet ist. Die zugeordneten Steuergeräte umfassen vorzugsweise Leistungsendstufen und einen Multifunktionschip sowie gegebenenfalls auch einen Mikrocontroller. Alle Komponenten sind dabei vorzugsweise in einem Gehäuse des Aktuators an jeder Fahrzeugseite integriert. Ferner können weitere Funktionen der Steuergeräte auch in bereits bestehenden Steuergeräten integriert werden. Eine Kommunikation zwischen den bestehenden Steuergeräten und den radzugeordneten Steuergeräten kann dabei über eine serielle Schnittstelle und gegebenenfalls wenige weitere Leitungen, wie z.B. eine Enable-Leitung und eine Status-Leitung, die den Tasterstatus eines Tasters zur Aktivierung der elektrischen Parkbremse anzeigt, ausgeführt sein (insbesondere LIN, PSI/PAS, CAN, FlexRay).

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Darstellung einer elektrischen Parkbremse gemäß einem ersten Ausführungsbeispiel der Erfindung,
- Figur 2: eine schematische Darstellung einer elektrischen Parkbremse gemäß einem zweiten Ausführungsbeispiel der vorliegenden Erfindung, und
- Figur 3: eine schematische Darstellung einer elektrischen Parkbremse gemäß einem dritten Ausführungsbeispiel der vorliegenden Erfindung.

### Bevorzugte Ausführungsformen der Erfindung

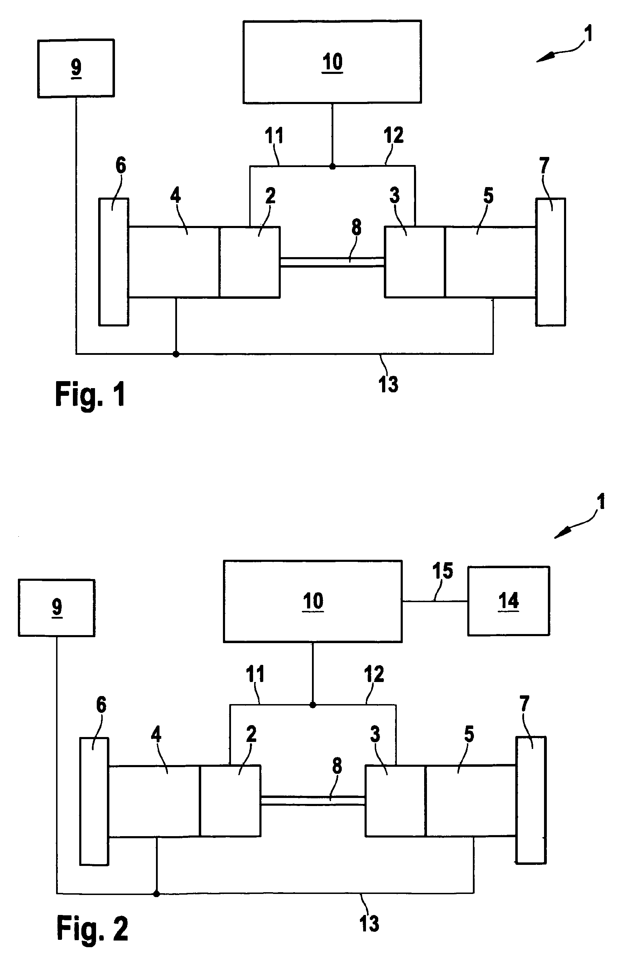

Nachfolgend wird unter Bezugnahme auf Figur 1 eine elektrische Parkbremse 1 gemäß einem ersten Ausführungsbeispiel der Erfindung im Detail beschrieben.

Die elektrische Parkbremse 1 umfasst ein erstes Steuergerät 2 und ein zweites Steuergerät 3, welche jeweils einem Rad an einer Hinterachse 8 zugeordnet sind. Das erste Steuergerät 2 ist unmittelbar an einem ersten Aktuator 4 angeordnet. Der erste Aktuator 4 ist ein Elektromotor, welcher mechanische Bauteile einer ersten Radbremse 6 betätigt, um die Radbremse in Eingriff oder außer Eingriff zu bringen. Das zweite Steuergerät 3 ist unmittelbar an einem zweiten Aktuator 5 angeordnet, welcher gleich wie der erste Aktuator 4 aufgebaut ist und mechanische Bauteile einer zweiten Radbremse 7 betätigt. Das erste Steuergerät 2 ist über eine Leitung 11 mit einem dritten Steuergerät 10 verbunden und das zweite Steuergerät 3 ist eine Leitung 12 ebenfalls mit dem dritten Steuergerät 10 verbunden. Das dritte Steuergerät 10 ist in diesem Ausführungsbeispiel ein Steuergerät für ein elektronisches Stabilitätsprogramm (ESP), welches schon im Fahrzeug vorhanden ist. Das dritte Steuergerät 10 übernimmt dabei eine Erfassung eines Fahrerwunsches, d.h. wenn ein Fahrer einen Taster oder Schalter betätigt, um eine Parkbremse zu aktivieren bzw. zu deaktivieren, und umfasst ferner eine Logik für die elektrische Parkbremse. Das erste Steuergerät 2 und das zweite Steuergerät 3 sind gleich aufgebaut und umfassen jeweils einen Mikrocontroller, einen Multifunktions-Chip (ASCI) sowie Leistungsendstufen. Dadurch können die beiden Steuergeräte 2, 3 eine Kraft und eine Leistung der elektrischen Parkbremse regeln. Eine Stromversorgung des ersten und zweiten Aktuators 4, 5 erfolgt dabei über eine Leitung 13 von einer Batterie 9 aus.

Die für die elektrische Parkbremse 1 notwendigen zusätzlichen Funktionen, welche im dritten Steuergerät 10 angeordnet sind, werden entweder von schon bereits vorhandenen Bauteilen im ESP-Steuergerät übernommen oder es sind lediglich zusätzliche Schnittstellen, z.B. eine serielle Schnittstelle zu einem Taster zur Erfassung des Fahrerwunsches und zur Ausgabe eines Systemzustandes, beispielsweise einer Parkbremsleuchte im Fahrzeuginneren, ausgestattet. Die Kommunikation zwischen dem dritten Steuergerät 10 und dem ersten bzw. zweiten Steuergerät 2, 3 kann dabei über LIN, PSI/PAS, CAN oder FlexRay erfolgen.

Durch die Anordnung des ersten und zweiten Steuergeräts unmittelbar am ersten bzw. zweiten Aktuator kann somit einerseits eine thermische Anbindung der Steuergeräte an eine große Aktuatormasse erreicht werden, so dass die Gefahr thermischer Schädigungen der Steuergeräte reduziert ist. Ferner kann durch die unmittelbare Anordnung der Steuergeräte an den Radbremsen eine Verkürzung von Leitungen erreicht werden. Darüber hinaus ist eine einfache Modularisierung des Parkbremssystems möglich, so dass beispielsweise je nach Fahrzeugtyp lediglich eine Logik für die elektrische Parkbremse im dritten Steuergerät 10 geändert werden muss. Die Anordnung unmittelbar am ersten bzw. zweiten Aktuator ermöglicht ferner, dass das erste Steuergerät bzw. das zweite Steuergerät unmittelbar im Aktuatorgehäuse untergebracht werden kann. Durch die Verwendung von Halbleiter-Schaltern an Stelle von Relais-Ansteuerungen der Aktuatoren 4, 5 können kürzere Systemreaktionszeiten und eine bessere Stellgenauigkeit sowie eine höhere Dynamik des Verzögerungsvorganges erreicht werden. Auch ist eine Geräuschentwicklung reduziert. Ferner können durch eine Reduktion des Leistungswiderstands aufgrund einer Verkürzung der Leitung zu den Aktuatoren 4, 5 höhere Klemmkräfte realisiert werden. Ferner kann eine Erhöhung einer Verfügbarkeit der elektrischen Parkbremse 1 erreicht werden, da auch bei Ausfall eines Aktuators oder eines Steuergeräts immer noch die Ansteuerung des anderen Aktuators möglich ist.

Nachfolgend wird unter Bezugnahme auf Figur 2 eine elektrische Parkbremse 1 gemäß einem zweiten Ausführungsbeispiel der Erfindung im Detail beschrieben. Das zweite Ausführungsbeispiel entspricht dabei im Wesentlichen dem ersten Ausführungsbeispiel, wobei im Unterschied zum ersten Ausführungsbeispiel beim zweiten Ausführungsbeispiel die Erfassung eines Fahrerwunsches, d.h. ob ein Parkbremse aktiviert oder deaktiviert werden soll, mittels eines separaten vierten Steuergerätes 14 erfolgt. Somit umfasst das dritte Steuergerät lediglich noch eine Logik für die elektrische Parkbremse. Das vierte Steuergerät 14 ist dabei über eine Leitung 15 mit dem dritten Steuergerät 10 verbunden. Ansonsten entspricht dieses Ausführungsbeispiel dem vorhergehenden Ausführungsbeispiel, so dass auf die dort gegebene Beschreibung verwiesen werden kann.

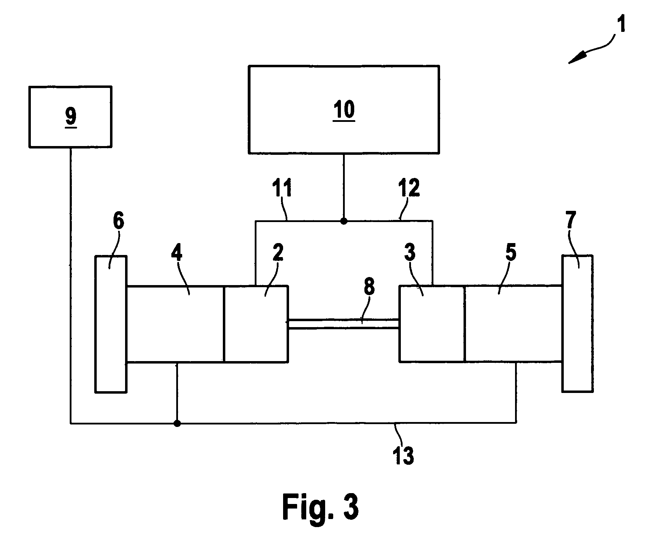

Figur 3 zeigt eine elektrische Parkbremse 1 gemäß einem dritten Ausführungsbeispiel der vorliegenden Erfindung. Gleiche bzw. funktional gleiche Teile sind dabei wieder mit den gleichen Bezugszeichen wie im vorhergehenden Ausführungsbeispiel bezeichnet.

Das dritte Ausführungsbeispiel entspricht im Wesentlichen dem ersten Ausführungsbeispiel, wobei im Unterschied zum ersten Ausführungsbeispiel beim dritten Ausführungsbeispiel im dritten Steuergerät 10 zusätzlich noch der Kraftregler integriert ist. Dabei erfasst und überträgt das erste Steuergerät 2 bzw. das zweite Steuergerät 3 die für die Kraftschätzung erforderlichen Motorzustandsgrößen des ersten bzw. zweiten Aktuators (Elektromotors) der Radbremsen, wie beispielsweise Drehzahl, Stromaufnahme, Spannung oder Temperatur an dem im dritten Steuergerät 10 integrierten Kraftregler. Die hierfür in dem ersten bzw. zweiten Steuergerät erforderliche Logik kann dabei in einem Mikrocontroller oder auch nur in einem ASIC implementiert sein. Ansonsten entspricht dieses Ausführungsbeispiel dem ersten Ausführungsbeispiel, so dass auf die dort gegebene Beschreibung verwiesen werden kann.

Hinsichtlich der beschriebenen Ausführungsbeispiele sei angemerkt, dass selbstverständlich das dritte Steuergerät an Stelle eines ESP-Steuergeräts grundsätzlich auch ein beliebiges anderes Steuergerät im Fahrzeug sein kann, wie beispielsweise ein Getriebe-Steuergerät oder ein Motor-Steuergerät oder ein ABS-Steuergerät (ABS = Antiblockiersystem) oder ein ASR-Steuergerät (ASR = Antischlupfregelung).

## Patentansprüche

1. Elektrische Parkbremse, umfassend wenigstens zwei radzugeordnete Steuergeräte (2, 3),
wobei jedes der wenigstens zwei radzugeordneten Steuergeräte (2, 3) einen ihm zugeordneten Aktuator (4, 5) ansteuert,
wobei die wenigstens zwei Aktuatoren (4, 5) an zwei einander gegenüberliegenden Radbremsen (6, 7) derselben Achse (8) angeordnet sind,
wobei die beiden angesteuerten Aktuatoren (4, 5) zwei Parkbremsaktuatoren sind, wobei die beiden Parkbremsaktuatoren an gegenüberliegenden Rädern einer Fahrzeugachse (8), insbesondere der Hinterräder, angebracht sind, **dadurch gekennzeichnet, dass**
jedes der wenigstens zwei radzugeordneten Steuergeräte (2, 3) an dem ihm zugeordneten Aktuator (4, 5) angebaut ist, und
die radzugeordneten Steuergeräte (2, 3) jeweils an einem Bremssattel angeordnet sind.

2. Elektrische Parkbremse nach Anspruch 1, **dadurch gekennzeichnet, dass** die Parkbremse ein drittes systemzugeordnetes Steuergerät (10) umfasst, welches die beiden radzugeordneten Steuergeräte (2, 3) ansteuert.

3. Elektrische Parkbremse nach einem der vorhergehenden Ansprüche, **dadurch gekennzeichnet, dass** jedes der beiden radzugeordneten Steuergeräte (2, 3) zumindest eine Leistungselektronik, einen Bus-Treiber und Logikschaltungen umfasst.

4. Elektrische Parkbremse nach Anspruch 3, **dadurch gekennzeichnet, dass** die Leistungselektronik der radzugehörigen Ansteuergeräte (2, 3) am Bremssattel und/oder am Parkbremsaktuator der jeweiligen Parkbremse angebracht ist.

5. Elektrische Parkbremse nach Anspruch 1, **dadurch gekennzeichnet, dass** die elektrische Parkbremse vom Typ Motor-on-Calliper ist, wobei eine Betriebsbremsfunktion eines Fahrzeugs hydraulisch realisiert ist.

6. Elektrische Parkbremse nach Anspruch 3, **dadurch gekennzeichnet, dass** die Leistungselektronik der elektrischen Parkbremse Feldeffekttransistoren umfasst.

7. Elektrische Parkbremse nach Anspruch 1, **dadurch gekennzeichnet, dass** es sich bei den beiden radzugeordneten Steuergeräten (2, 3) um Controller handelt.

8. Elektrische Parkbremse nach einem der vorhergehenden Ansprüche, **dadurch gekennzeichnet, dass** das erste und/oder zweite Steuergerät (2, 3) nur nach Übermittlung eines vorbestimmten Codes aktivierbar ist.

9. Elektrische Parkbremse nach Anspruch 2, **dadurch gekennzeichnet, dass** das dritte Steuergerät ein ESP-Steuergerät oder ein Getriebe-Steuergerät oder ein Motor-Steuergerät oder ein ABS-Steuergerät oder ein ASR-Steuergerät ist.

## Claims

1. Electric parking brake comprising at least two control units (2, 3) assigned to the wheels,
wherein each of the at least two control units (2, 3) assigned to the wheels actuate an actuator (4, 5) assigned to it,
wherein the at least two actuators (4, 5) are arranged on two wheel brakes (6, 7), lying opposite one another, of the same axle (8),
wherein the two actuated actuators (4, 5) are two parking brake actuators,
wherein the two parking brake actuators are mounted on opposite wheels of a vehicle axle (8), in particular the rear wheels, **characterized in that**
each of the at least two control units (2, 3) assigned to the wheels is installed on the actuator (4, 5) assigned to it, and
the control units (2, 3) assigned to the wheels are each arranged on a brake calliper.

2. Electric parking brake according to Claim 1, **characterized in that** the parking brake comprises a third control unit (10) assigned to the system, which control unit (10) actuates the two control units (2, 3) assigned to the wheels.

3. Electric parking brake according to one of the preceding claims, **characterized in that** each of the two control units (2, 3) assigned to the wheels comprises at least one power electronics unit, one bus driver and a logic circuit.

4. Electric parking brake according to Claim 3, **characterized in that** the power electronics unit of the control units (2, 3) assigned to the wheels is mounted on the brake calliper and/or on the parking brake actuator of the respective parking brake.

5. Electric parking brake according to Claim 1, **characterized in that** the electric parking brake is of the motor-on-calliper type, wherein a service brake function of a vehicle is implemented hydraulically.

6. Electric parking brake according to Claim 3, **characterized in that** the power electronics unit of the electric parking brake comprises field effect transistors.

7. Electric parking brake according to Claim 1, **characterized in that** both of the control units (2, 3) assigned to the wheels are controllers.

8. Electric parking brake according to one of the preceding claims, **characterized in that** the first and/or second control units (2, 3) can be activated only after a predetermined code has been transmitted.

9. Electric parking brake according to Claim 2, **characterized in that** the third control unit is an ESP control unit or a transmission control unit or an engine control unit or an ABS control unit or a traction control unit.

## Revendications

1. Frein de stationnement électrique, comprenant au moins deux appareils de commande (2, 3) associés aux roues ;
chacun des au moins deux appareils de commande (2, 3) associés aux roues commandant un actionneur (4, 5) lui étant associé ;
les au moins deux actionneurs (4, 5) étant disposés au niveau de deux freins de roue (6, 7) opposés l'un par rapport à l'autre du même essieu (8) ;
les deux actionneurs (4, 5) commandés étant deux actionneurs de frein de stationnement, les deux actionneurs de frein de stationnement étant disposés au niveau des roues opposées d'un essieu de véhicule (8), notamment des roues arrière ;
**caractérisé en ce que** :
chacun des au moins deux appareils de commande (2, 3) associés aux roues est monté au niveau de l'actionneur (4, 5) lui étant associé ; et
les appareils de commande (2, 3) associés aux roues sont respectivement disposés au niveau d'un étrier de frein.

2. Frein de stationnement électrique selon la revendication 1, **caractérisé en ce que** le frein de stationnement comprend un troisième appareil de commande (10) associé au système commandant les deux appareils de commande (2, 3) associés aux roues.

3. Frein de stationnement électrique selon l'une quelconque des revendications précédentes, **caractérisé en ce que** chacun des deux appareils de commande (2, 3) associés aux roues comprend au moins un système électronique de puissance, un entraîneur de bus et des circuits logiques.

4. Frein de stationnement électrique selon la revendication 3, **caractérisé en ce que** le système électronique de puissance des appareils de commande (2, 3) associés aux roues est placé au niveau de l'étrier de frein et/ou au niveau de l'actionneur de frein de stationnement du frein de stationnement respectif.

5. Frein de stationnement électrique selon la revendication 1, **caractérisé en ce que** le frein de stationnement électrique est de type frein cantilever sur moteur (Motor-on-Calliper), une fonction de frein de service de véhicule automobile étant effectuée de façon hydraulique.

6. Frein de stationnement électrique selon la revendication 3, **caractérisé en ce que** le système électronique de puissance du frein de stationnement électrique comprend des transistors à effet de champ.

7. Frein de stationnement électrique selon la revendication 1, **caractérisé en ce que** les deux appareils de commande (2, 3) associés aux roues sont des systèmes de commande.

8. Frein de stationnement électrique selon l'une quelconque des revendications précédentes, **caractérisé en ce que** le premier et/ou le deuxième appareil de commande (2, 3) peuvent être activés après transmission d'un code prédéterminé.

9. Frein de stationnement électrique selon la revendication 2, **caractérisé en ce que** le troisième appareil de commande est un appareil de commande d'ESP ou un appareil de commande de transmission ou un appareil de commande de moteur ou un appareil de commande d'ABS ou un appareil de commande d'ASR.
